# EUROPÄISCHE PATENTSCHRIFT

(11) **EP 4 399 120 B1**
(45) Veröffentlichungstag und Bekanntmachung des Hinweises auf die Patenterteilung: **24.12.2025**
(21) Anmeldenummer: 22757528.9
(22) Anmeldetag: 25.07.2022
(51) Int. Cl.: B60L 58/25, B60L 58/27, B60L 7/22, B60L 1/08, H01M 10/615, H01M 10/625, H01M 10/637, H01M 10/6567, H01M 10/6571

(54) **VORRICHTUNG UND VERFAHREN ZUR ERWÄRMUNG EINER TRAKTIONSBATTERIE**
APPARATUS AND METHOD FOR HEATING A TRACTION BATTERY
DISPOSITIF ET PROCÉDÉ DE CHAUFFAGE D'UNE BATTERIE DE TRACTION

(30) Priorität: 09.09.2021 DE 102021209949
(43) Veröffentlichungstag der Anmeldung: 17.07.2024
(73) Patentinhaber: Robert Bosch GmbH, 70442 Stuttgart (DE)
(72) Erfinder: HOEGELE, Georg, 71282 Hemmingen (DE); GOLLENSTEDE, Julian, 75173 Pforzheim (DE)
(86) Internationale Anmeldenummer: PCT/EP2022/070762
(87) Internationale Veröffentlichungsnummer: WO 2023/036510

(56) Entgegenhaltungen:
- WO-A2-2008/137247
- DE-A1- 102012 210 146
- DE-A1- 102013 202 999
- FR-A1- 3 101 820
- US-A1- 2015 239 474
- US-A1- 2019 039 477

## Beschreibung

Die Erfindung betrifft eine Vorrichtung zur Erwärmung einer Traktionsbatterie und ein Verfahren zur Erwärmung einer Traktionsbatterie. Ferner betrifft die Erfindung einen Antriebsstrang mit einer Vorrichtung, ein Fahrzeug mit einem Antriebsstrang sowie ein Computerprogramm und ein computerlesbares Medium.

### Stand der Technik

Die Druckschrift US 2015/239474 A1 offenbart eine Vorrichtung und Verfahren zur Erwärmung einer Traktionsbatterie in einem Fahrzeug, wobei die Vorrichtung einen elektrischen Verbraucher umfasst, wobei der elektrische Verbraucher beim Betrieb einen Laststrom aufnimmt und Abwärme erzeugt, und wobei der elektrische Verbraucher betrieben wird zur Erwärmung der Traktionsbatterie. WO 2008/137247 A2 offenbart eine Vorrichtung in einem Fahrzeug aufweisend eine Traktionsbatterie, wobei die Vorrichtung einen elektrischen Verbraucher umfasst, wobei der elektrische Verbraucher beim Betrieb einen Laststrom aufnimmt und Abwärme erzeugt, wobei die Vorrichtung einen Antriebsanschluss umfasst zum Anschließen eines elektrischen Antriebs, wobei der elektrische Verbraucher einen Bremswiderstand zum Aufnehmen generatorischer elektrischer Leistung des elektrischen Antriebs umfasst. DE 10 2013 202999 A1 offenbart Vorrichtung in einem Fahrzeug mit Traktionsbatterie; und DE 10 2012 210 146 A1 offenbart Vorrichtung zur Erwärmung einer Traktionsbatterie in einem Fahrzeug, wobei die Vorrichtung einen elektrischen Verbraucher umfasst, wobei der elektrische Verbraucher beim Betrieb einen Laststrom aufnimmt und Abwärme erzeugt, und wobei der elektrische Verbraucher betrieben wird zur Erwärmung der Traktionsbatterie, wobei die Vorrichtung einen Antriebsanschluss umfasst zum Anschließen eines elektrischen Antriebs, und der elektrische Verbraucher einen Widerstand zum Aufnehmen generatorischer elektrischer Leistung des elektrischen Antriebs umfasst. Batterien weisen Temperaturabhängigkeiten auf. So reduzieren Umgebungstemperaturen unterhalb der Raumtemperatur die Batteriekapazität. Dieser Effekt wird beispielsweise durch die temperaturabhängige Leitfähigkeit des Elektrolyten und des Innenwiderstands einer Batterie hervorgerufen. Um Batteriezellen auch bei geringen Umgebungstemperaturen effizient betreiben zu können, werden diese Batterien möglichst rasch auf eine für den Betrieb optimale Temperatur erwärmt. Die DE 10 2012 210 146 A1 offenbart hierzu eine Vorrichtung zum Heizen einer Batterie mit einem in die Batterie integriertem Heizelement. Das Heizelement wird bei Bedarf mit elektrischer Energie versorgt und gibt folglich Abwärme ab, die zur Erwärmung der Batterie verwendet wird.

Folglich wird für die Erwärmung der Batterie ein zusätzliches Bauteil, das Heizelement, benötigt.

Es besteht daher der Bedarf an Vorrichtungen und Verfahren zur Erwärmung von Batterien, ohne zusätzliche Bauteile.

Bremswiderstände in elektrischen Antriebssträngen dienen dazu, die erzeugte elektrische Leistung oder Energie der als Generatoren geschalteten Fahrmotoren von elektrischen oder von dieselelektrischen Fahrzeugen, Triebfahrzeugen oder von Oberleitungsbussen im Fehlerfall in Abwärme umzuwandeln, wenn ein Rückspeisen der Energie in eine Batterie oder ein angeschlossenes Stromversorgungs-Netz nicht mehr möglich ist. Zur Abführung der Abwärme werden die hierzu verwendeten Bremswiderstände außerhalb des Antriebsstrangs, bei mobilen Anwendungen bevorzugt auf dem Dach, in oder unter einem Fahrzeug angebracht. Fahrzeuge müssen mit redundanten Bremseinrichtungen ausgestattet werden. Bremswiderstände werden hierzu eingesetzt.

### Offenbarung der Erfindung

Es wird eine Vorrichtung zur Erwärmung einer Traktionsbatterie in einem Fahrzeug bereitgestellt, gemäß dem Anspruch 1, wobei die Vorrichtung einen elektrischen Verbraucher umfasst, wobei der elektrische Verbraucher beim Betrieb einen Laststrom aufnimmt und Abwärme erzeugt und wobei der elektrische Verbraucher zur Erwärmung der Traktionsbatterie betrieben wird. Die Vorrichtung umfasst weiter einen Antriebsanschluss zum Anschließen eines elektrischen Antriebs. Der elektrische Verbraucher umfasst einen Bremswiderstand zum Aufnehmen generatorischer elektrischer Leistung des elektrischen Antriebs.

Es wird eine Vorrichtung zur Erwärmung einer Traktionsbatterie in einem Fahrzeug bereitgestellt. Die Traktionsbatterie eines Fahrzeugs ist bevorzugt eine Gleichspannungsquelle, eine Batterie oder eine Hochspannungsbatterie. Die Traktionsbatterie dient der Versorgung einer elektrischen Maschine eines elektrischen Antriebsstrangs mit elektrischer Energie, wobei hierzu bevorzugt eine Gleichspannung der Traktionsbatterie mittels einem Wechselrichter, bevorzugt mittels einem Antriebs-Wechselrichter, in eine mehrphasige Wechselspannung zur Versorgung der elektrischen Maschine gewandelt wird. Die Vorrichtung umfasst einen elektrischen Verbraucher, der beim Betrieb Abwärme erzeugt. Beim Betrieb eines elektrischen Verbrauchers, liegt eine elektrische Spannung am Verbraucher an und ein Laststrom fließt durch den Verbraucher. Die beim Betrieb erzeugte Abwärme wird zur Erwärmung der Traktionsbatterie verwendet. Die Vorrichtung zum Erwärmen der Traktionsbatterie umfasst einen Anschluss zum Anschließen eines elektrischen Antriebs. Folglich kann die Vorrichtung mit einem elektrischen Antrieb elektrisch gekoppelt werden. Der elektrische Verbraucher umfasst einen Bremswiderstand und ist dazu ausgelegt, wie oben beschrieben, bevorzugt im Fehlerfall, generatorische elektrische Leistung des elektrischen Antriebs aufzunehmen. Beim Betrieb des elektrischen Verbrauchers wird Abwärme erzeugt, die zur Erwärmung der Traktionsbatterie verwendet wird. Bevorzugt ist die Vorrichtung dazu eingerichtet, eine Temperatur, die die Temperatur der Traktionsbatterie charakterisiert, einzulesen und den elektrischen Verbraucher in Abhängigkeit der Temperatur zu betreiben. Bevorzugt betreibt die Vorrichtung den elektrischen Verbraucher, wenn die Temperatur einen vorbestimmten Temperaturwert unterschreitet.

Gemäß der Erfindung wird eine Vorrichtung bereitgestellt, die eine Traktionsbatterie in einem Fahrzeug mittels eines Bremswiderstandes erwärmt, wobei der Bremswiderstand eigentlich für einen anderen Zweck im Fahrzeug vorhanden ist.

Gemäß der Erfindung umfasst die Vorrichtung einen Kühlkreislaufanschluss zum Anschließen der Vorrichtung an einen mit der Traktionsbatterie verbundenen Kühlkreislauf.

Es wird eine Vorrichtung zur Erwärmung einer Traktionsbatterie bereitgestellt, die einen Kühlkreislaufanschluss umfasst. Ein Kühlkreislaufanschluss ermöglicht das Verbinden oder Einbinden der Vorrichtung in einen Kühlkreislauf bevorzugt eines elektrischen Antriebsstrangs oder eines Fahrzeugs. Kühlkreisläufe werden bevorzugt vorgesehen, wenn bei Belastung elektrischer Komponenten, wie elektrische Maschinen, Wechselrichter und Batterien, viel Abwärme entsteht. Die entstehende Abwärme wird mittels eines Kühlkreislaufes, der bevorzugt ein Kühlfluid enthält, von einer ersten elektrischen oder mechanischen Komponente oder Wärmequelle zu einer weiteren Komponente und schließlich zu einem Wärmetauscher abgeführt. Das Kühlfluid wird mittels des Wärmetauschers abgekühlt und erneut an den Wärmequellen vorbei geführt zur Kühlung der jeweiligen Komponenten. Durch Vorsehen eines Kühlkreislaufanschlusses wird ermöglicht, dass die an der Vorrichtung oder dem Verbraucher entstehende Abwärme über das Kühlfluid abgeführt werden kann. Der Kühlkreislauf ist bevorzugt in Flussrichtung nach der Vorrichtung auch mit der Traktionsbatterie verbunden, bevorzugt bevor das Kühlfluid durch einen ebenfalls angeschlossenen Wärmetauscher abgekühlt wird. Daher wird vorteilhaft eine Erwärmung der Traktionsbatterie mittels der Abwärme der Vorrichtung ermöglicht, wobei die Abwärme mittels des Kühlfluids von der Vorrichtung zur Traktionsbatterie geleitet wird.

In einer anderen Ausgestaltung der Erfindung umfasst die Vorrichtung einen Batterieanschluss zum Herstellen einer elektrischen Verbindung mit einem Gleichspannungsanschluss der zu erwärmenden Traktionsbatterie.

Es wird eine Vorrichtung zur Erwärmung einer Traktionsbatterie bereitgestellt, die einen Batterieanschluss umfasst. Der Batterieanschluss ermöglicht die direkte elektrische Verbindung der Vorrichtung mit der Traktionsbatterie. Bei einem Betrieb des Verbrauchers fließt Strom durch den Verbraucher. Über den Batterieanschluss fließt folglich auch dieser Strom durch die Batterie. Bei einem Stromfluss durch die Batterie entsteht ebenfalls Abwärme innerhalb der Batterie. Dadurch wird vorteilhaft eine weitere Möglichkeit zur Erwärmung der Traktionsbatterie mittels der Vorrichtung bereitgestellt.

In einer anderen Ausgestaltung der Erfindung umfasst die Vorrichtung einen Brems-Wechselrichter, welcher zwischen den Antriebsanschluss und den Verbraucher geschaltet ist.

Es wird eine Vorrichtung bereitgestellt, die einen Brems-Wechselrichter umfasst. Der Brems-Wechselrichter umfasst einen Wechselrichter oder Inverter. Wechselrichter zur Wandlung einer Gleichspannung in eine mehrphasige Wechselspannung umfassen bevorzugt Halbbrücken entsprechend der Anzahl der Phasen der zu erzeugenden Wechselspannung. Die Halbbrücken umfassen eine Reihenschaltung zweier ansteuerbarer Schaltelemente, die zwischen die Potentiale der Gleichspannung geschaltet sind. Ein Mittelabgriff zwischen den Schaltelementen je Halbbrücke ist mit jeweils einem Phasenausgang des Wechselrichters verbunden. Bevorzugt sind an die jeweiligen Phasenausgänge jeweils ein Verbraucher angeschlossen. Folglich ist der steuerbare Brems-Wechselrichter zwischen den Antriebsanschluss und den mindestens einen Verbraucher geschaltet. Vorteilhaft wird eine Möglichkeit bereitgestellt den mindestens einen Verbraucher steuerbar, also ein- und ausschaltbar, mit dem Antriebsanschluss elektrisch zu verbinden.

Ferner betrifft die Erfindung einen elektrischen Antriebsstrang für ein Fahrzeug, wobei der Antriebsstrang eine Traktionsbatterie, einen Antriebs-Wechselrichter und eine beschriebene Vorrichtung umfasst.

Ein Antriebstrang eines Fahrzeugs dient der Wandlung elektrischer Energie aus einer Energiequelle, der Traktionsbatterie, in mechanische Energie, die für den Vortrieb des Fahrzeugs eingesetzt wird. Bei einem elektrischen Antriebsstrang wird beispielsweise die elektrische Energie aus einer Energiequelle mittels eines Wechselrichters, eines Antriebs-Wechselrichters, in eine Wechselspannung umgewandelt, mit der eine elektrische Maschine betrieben wird. Bevorzugt wird der Antriebs-Wechselrichter zur Erwärmung der Traktionsbatterie betrieben. Beim Betrieb des Antriebs-Wechselrichters fließt ein elektrischer Strom durch den Antriebs-Wechselrichter. Dieser elektrische Strom fließt von der Traktionsbatterie durch den Antriebs-Wechselrichter und die Wicklungen der elektrischen Maschine. Vorteilhaft wird somit ein Antriebsstrang bereitgestellt, bei dessen Betrieb die Traktionsbatterie erwärmt wird. Die Erwärmung in dem Antriebsstrang erfolgt sowohl mittels der Abwärme der Vorrichtung und des Verbrauchers oder dem dadurch verursachten Stromfluss durch die Traktionsbatterie als auch mittels der Abwärme des Antriebs-Wechselrichters und der Wicklungen der elektrischen Maschine oder dem dadurch verursachten Stromfluss durch die Traktionsbatterie.

Ferner betrifft die Erfindung ein Fahrzeug, mit einem wie bisher beschriebenen Antriebsstrang. Vorteilhaft wird ein Fahrzeug bereitgestellt, dessen Traktionsbatterie effizient mittels der Vorrichtung und/ oder dem Antriebsstrang erwärmt wird.

Ferner betrifft die Erfindung ein Verfahren zur Erwärmung einer Traktionsbatterie.

Das Verfahren wird mit einer beschriebenen Vorrichtung ausgeführt. Das Verfahren umfasst den Schritt: Betreiben des Verbrauchers zur Erwärmung der Traktionsbatterie.

Es wird ein Verfahren bereitgestellt, bei dem ein elektrischer Verbraucher zur Erwärmung der Traktionsbatterie betrieben wird. Bevorzugt umfasst das Verfahren die weiteren Schritte: Einlesen einer Temperatur, die die Temperatur der zu erwärmenden Traktionsbatterie charakterisiert und Betreiben des elektrischen Verbrauchers in Abhängigkeit der Temperatur, bevorzugt Betreiben des elektrischen Verbrauchers, wenn die Temperatur einen vorbestimmten Temperaturwert unterschreitet. Der elektrische Verbraucher ist von einer Vorrichtung umfasst. Die Vorrichtung umfasst einen Antriebsanschluss zum Anschließen eines elektrischen Antriebs. Der elektrische Verbraucher ist ein Bremswiderstand, der zur Aufnahme generatorischer elektrischer Leistung eines angeschlossenen elektrischen Antriebs eingerichtet ist. Vorteilhaft wird ein Verfahren für eine effiziente Erwärmung einer Traktionsbatterie bereitgestellt.

In einer anderen Ausgestaltung der Erfindung umfasst der Betrieb des elektrischen Verbrauchers ein Bestromen des Bremswiderstands und die Abwärme des Bremswiderstands wird über einen Kühlkreislauf der Traktionsbatterie zugeführt.

Vorteilhaft wird ein weiteres Verfahren für eine effiziente Erwärmung einer Traktionsbatterie bereitgestellt.

In einer anderen Ausgestaltung der Erfindung umfasst der Betrieb des elektrischen Verbrauchers ein Bestromen des Bremswiderstands, wobei der Laststrom der Traktionsbatterie entnommen wird.

Vorteilhaft wird ein weiteres Verfahren für eine effiziente Erwärmung einer Traktionsbatterie bereitgestellt.

In einer anderen Ausgestaltung der Erfindung wird das Verfahren mit einem beschriebenen Antriebsstrang ausgeführt. Das Verfahren umfasst den Schritt: Betreiben des Antriebs-Wechselrichters zur Erwärmung der Traktionsbatterie.

Vorteilhaft wird ein weiteres Verfahren für eine effiziente Erwärmung einer Traktionsbatterie bereitgestellt.

Ferner betrifft die Erfindung ein Computerprogramm, umfassend Befehle, die bewirken, dass die beschriebene Vorrichtung das beschriebene Verfahren ausführt.

Ferner betrifft die Erfindung ein computerlesbares Medium, umfassend Befehle, die bei der Ausführung durch eine beschriebene Vorrichtung das beschriebene Verfahren ausführt.

Es versteht sich, dass die Merkmale, Eigenschaften und Vorteile der Vorrichtung entsprechend auf das Verfahren bzw. den Antriebsstrang und das Fahrzeug und umgekehrt zutreffen bzw. anwendbar sind.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnung

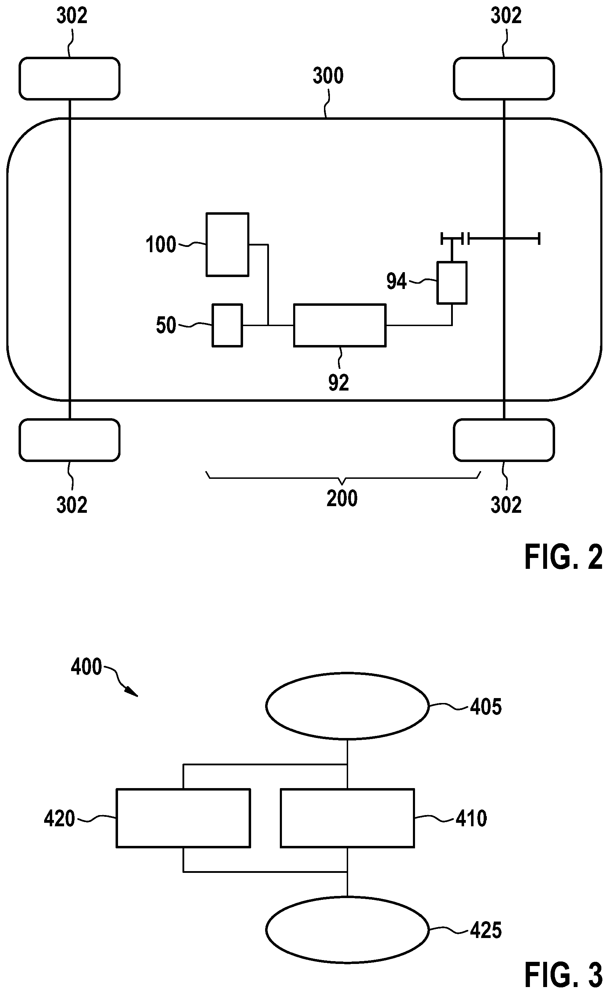

Im Folgenden soll die Erfindung anhand einiger Figuren näher erläutert werden, dazu zeigen:
Figur 1
   eine schematische Darstellung einer Vorrichtung zur Erwärmung einer Traktionsbatterie
Figur 2 ein schematisch dargestelltes Fahrzeug mit einem Antriebsstrang mit einer Vorrichtung
Figur 3
   ein schematisch dargestelltes Verfahren zum Erwärmen einer Traktionsbatterie.

### Ausführungsformen der Erfindung

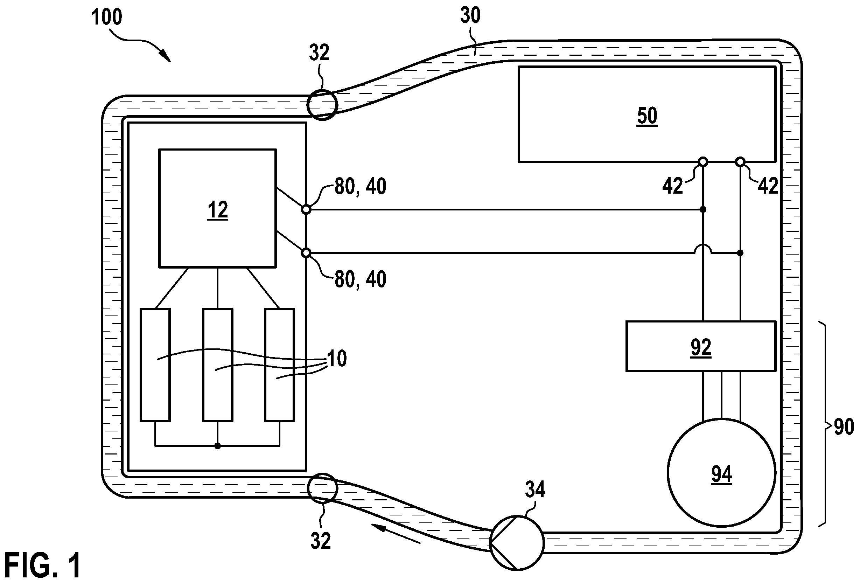

Die Figur 1 zeigt eine Vorrichtung 100 zur Erwärmung einer Traktionsbatterie 50. Die Vorrichtung 100 umfasst mindestens einen elektrischen Verbraucher 10. Die Vorrichtung 100 umfasst einen Antriebsanschluss 80 zum Anschließen eines elektrischen Antriebs 90. Bevorzugt umfasst der elektrische Antrieb 90 einen Wechselrichter, den Antriebs-Wechselrichter 92, und/ oder eine elektrische Maschine 94. Der elektrische Verbraucher 10 umfasst einen Bremswiderstand und ist dazu eingerichtet, generatorische elektrische Leistung des anschließbaren elektrischen Antriebs 90 aufzunehmen. Der Verbraucher 10 ist hierzu bevorzugt als ohmsche, kapazitive und/ oder induktive Last ausgebildet. Der Verbraucher 10 ist bevorzugt einstückig oder auch aus mehreren gleichartigen oder unterschiedlichen einzelnen Verbrauchern 10 ausgebildet. Der elektrische Verbraucher 10 nimmt beim Betrieb einen Laststrom auf und erzeugt dabei Abwärme. Folglich wird der elektrische Verbraucher 10 betrieben zur Erwärmung der Traktionsbatterie. Bevorzugt umfasst die Vorrichtung 100 hierzu einen Kühlkreislaufanschluss 32 zum Anschließen der Vorrichtung an einen mit der Traktionsbatterie 50 verbundenen Kühlkreislauf 30. Der Kühlkreislauf 30 ist bevorzugt mit der Vorrichtung 100 verbunden. In Flussrichtung (mittels eines Pfeils dargestellt) entlang des Kühlkreislaufes 30 ist nach der Vorrichtung 100 mit dem Verbraucher 10 die Traktionsbatterie 50 angeordnet, sodass Abwärme der Vorrichtung 100 mittels des Kühlfluids zu der Traktionsbatterie 50 transportiert wird, die bevorzugt ebenfalls an den Kühlkreislauf 30 angeschlossen ist. Weiter umfasst der Kühlkreislauf 30 einen Wärmetauscher und eine Pumpe 34, die nach der Traktionsbatterie 50 im Kühlkreislauf 30 entlang der Flussrichtung angeordnet sind, die das Kühlfluid abkühlen und transportieren, bevor es erneut an der Vorrichtung 100 vorbeiströmt. Bevorzugt umfasst die Vorrichtung 100 einen Batterieanschluss 40 zum Herstellen einer elektrischen Verbindung mit einem Gleichspannungsanschluss 42 der zu erwärmenden Traktionsbatterie 50. Der Batterieanschluss 40 kann bevorzugt einstückig mit dem Antriebsanschluss 80 ausgeführt sein, also als ein gemeinsamer, bevorzugt zweipoliger, Anschluss ausgeführt sein, da an dieser Stelle bevorzugt die Gleichspannungspotentiale der Vorrichtung 100, der Traktionsbatterie 50 und des elektrischen Antriebs 90 miteinander verbunden sind. Bevorzugt umfasst die Vorrichtung einen weiteren Wechselrichter, den Brems-Wechselrichter 12. Der Brems-Wechselrichter 12 ist zwischen den Antriebsanschluss 80 und den Verbraucher 10 geschaltet. Beispielhaft ist der Bremswechselrichter 12 als dreiphasiger Wechselrichter ausgeführt, an den bevorzugt an jede Phase je ein Verbraucher 10 angeschlossen ist. Beispielhaft sind die drei Verbraucher 10 an je einem Anschluss zu einem Stern oder Dreieck zusammengeschaltet. Der Brems-Wechselrichter 12 umfasst bevorzugt Schaltelemente die je Phase als Halbbrücken angeordnet sind. Die Schaltelemente werden beim Betrieb eines Wechselrichters selektiv geöffnet und geschlossen. Mittels Schließen einzelner Schaltelemente können die Anschlüsse eines Verbrauchers mit jeweils einem der Gleichspannungspotentiale der Vorrichtung 100 oder des Wechselrichters verbunden werden. Über den Batterieanschluss 40 und den Antriebsanschluss 80 resultiert folglich ein Stromfluss durch mindestens einen der Verbraucher 10. Dieser Betriebszustand bei dem ein Strom durch einen Verbraucher 10 und/ oder einen Wechselrichter 12, 92 fließt, wird als Betrieb oder das Betreiben des Verbrauchers 10 und/ oder des Wechselrichters 12, 92 bezeichnet.

Die Figur 2 zeigt ein schematisch dargestelltes Fahrzeug 300 mit vier Rädern 302 und einem Antriebsstrang 200. Das Fahrzeug 300 ist hier nur beispielhaft mit vier Rädern 302 dargestellt, wobei die Erfindung gleichermaßen in beliebigen Fahrzeugen mit einer beliebigen Anzahl an Rädern zu Lande, zu Wasser und in der Luft einsetzbar ist. Der beispielhaft dargestellte Antriebsstrang 200 umfasst mindestens die Traktionsbatterie 50, den Antriebs-Wechselrichter 92 und die Vorrichtung 100. Bevorzugt umfasst der Antriebsstrang eine elektrische Maschine 94. Die Energie der Traktionsbatterie 50 wird mittels des Antriebswechselrichters 92 in eine beispielsweise dreiphasige Wechselspannung gewandelt für den Betrieb der elektrischen Maschine 94 als Antriebsaggregat für ein Fahrzeug 300. Sowohl einzelne als auch alle der dargestellten elektrischen Komponenten können mit einem Kühlkreislauf (nicht dargestellt) verbunden sein, sodass ein Transport der Abwärme von einer Komponente zur nächsten ermöglicht wird und bevorzugt alle Komponenten mittels dem Kühlkreislauf gekühlt werden können.

Figur 3 zeigt ein schematisch dargestelltes Ablaufdiagramm für ein Verfahren 400 zur Erwärmung einer Traktionsbatterie 50. Das Verfahren 400 beginnt mit Schritt 405. In Schritt 410 wird der elektrische Verbraucher 10 der Vorrichtung 100 betrieben zur Erwärmung der Traktionsbatterie 50. Bevorzugt umfasst der Betrieb 410 des elektrischen Verbrauchers 10 ein Bestromen des Bremswiderstands und die resultierende Abwärme des Bremswiderstands wird über einen Kühlkreislauf 30 der Traktionsbatterie 50 zugeführt. Bevorzugt umfasst der Betrieb 410 des elektrischen Verbrauchers 10 ein Bestromen des Bremswiderstands und der Laststrom durch den Verbraucher 10 wird der Traktionsbatterie 50 entnommen. Bevorzugt wird der Laststrom durch den Verbraucher 10 einer an den Batterieanschluss 40 und oder den Antriebsanschluss 80 anschließbaren externen Energiequelle außerhalb des Fahrzeugs entnommen. Bevorzugt ist die anschließbare externe Energiequelle ein öffentliches Stromnetz oder ein am öffentlichen Stromnetz angeschlossenes Ladegerät. Bevorzugt umfasst das Verfahren den Schritt 420, bei dem der Antriebs-Wechselrichters 92 zur Erwärmung der Traktionsbatterie 50 betrieben wird. Mit Schritt 425 endet das Verfahren.

## Patentansprüche

1. Vorrichtung (100) zur Erwärmung einer Traktionsbatterie (50) in einem Fahrzeug (300),
wobei die Vorrichtung (100) einen elektrischen Verbraucher (10) umfasst,
wobei der elektrische Verbraucher (10) beim Betrieb einen Laststrom aufnimmt und Abwärme erzeugt,
und wobei der elektrische Verbraucher (10) betrieben wird zur Erwärmung der Traktionsbatterie (50),
wobei
die Vorrichtung (100) einen Antriebsanschluss (80) umfasst zum Anschließen eines elektrischen Antriebs (90),
**dadurch gekennzeichnet, dass**
der elektrische Verbraucher (10) einen Bremswiderstand zum Aufnehmen generatorischer elektrischer Leistung des elektrischen Antriebs (90) umfasst,
und dass die Vorrichtung (100) einen Kühlkreislaufanschluss (32) umfasst zum Anschließen der Vorrichtung an einen mit der Traktionsbatterie (50) verbundenen Kühlkreislauf (30).

2. Vorrichtung nach Anspruch 1,
wobei die Vorrichtung (100) einen Batterieanschluss (40) umfasst zum Herstellen einer elektrischen Verbindung mit einem Gleichspannungsanschluss (42) der zu erwärmenden Traktionsbatterie (50).

3. Vorrichtung nach einem der vorhergehenden Ansprüche,
wobei die Vorrichtung einen Brems-Wechselrichter (12) umfasst, der zwischen den Antriebsanschluss (80) und den Verbraucher (10) geschaltet ist.

4. Elektrischer Antriebsstrang (200) für ein Fahrzeug,
wobei der Antriebsstrang eine Traktionsbatterie (50), einen Antriebs-Wechselrichter (92) und eine Vorrichtung (100) nach einem der Ansprüche 1 bis 3 umfasst.

5. Elektrischer Antriebsstrang (200) nach Anspruch 4, wobei ,
wobei der Antriebs-Wechselrichter (92) zur Erwärmung der Traktionsbatterie (50) betrieben wird.

6. Fahrzeug (300) mit einem Antriebsstrang (200) nach einem der Ansprüche 4 bis 5.

7. Verfahren (400) zur Erwärmung einer Traktionsbatterie (50),
mit einer Vorrichtung (100) nach einem der Ansprüche 1 bis 3,
mit dem Schritt:
Betreiben (410) des elektrischen Verbrauchers (10) zur Erwärmung der Traktionsbatterie (50),
wobei die Vorrichtung (100) über einen Antriebsanschluss (80) an den elektrischen Antrieb (90) angeschlossen wird,
und der elektrische Verbraucher (10) mittels des Bremswiderstands generatorische elektrische Leistung des elektrischen Antriebs (90) aufnimmt,
**dadurch gekennzeichnet, dass**
der Betrieb (410) des elektrischen Verbrauchers (10) ein Bestromen des Bremswiderstands umfasst und die Abwärme des Bremswiderstands über einen Kühlkreislauf (30) der Traktionsbatterie (50) zugeführt wird.
i.

8. Verfahren (400) nach Anspruch 7,
wobei der Laststrom der Traktionsbatterie (50) entnommen wird.

9. Verfahren (400) zur Erwärmung einer Traktionsbatterie (50),
mit einem Antriebsstrang (200) nach einem der Ansprüche 4 bis 5,
mit den Schritten:
Betreiben (420) des Antriebs-Wechselrichters (92) zur Erwärmung der Traktionsbatterie (50),
wobei
die Vorrichtung (100) über einen Antriebsanschluss (80) an den elektrischen Antrieb (90) angeschlossen wird,
und der elektrische Verbraucher (10) mittels des Bremswiderstands generatorische elektrische Leistung des elektrischen Antriebs (90) aufnimmt,
**dadurch gekennzeichnet, dass**
der Betrieb (410) des elektrischen Verbrauchers (10) ein Bestromen des Bremswiderstands umfasst und die Abwärme des Bremswiderstands über einen Kühlkreislauf (30) der Traktionsbatterie (50) zugeführt wird.

10. Computerprogramm, umfassend Befehle, die bewirken, dass die Vorrichtung nach Anspruchs 1 bis 3 die Verfahrensschritte nach Anspruch 7 bis 9 ausführt.

11. Computerlesbares Medium, umfassend Befehle, die bei der Ausführung durch eine Vorrichtung nach Anspruchs 1 bis 3 die Verfahrensschritte nach Anspruch 7 bis 9 ausführt.

## Claims

1. Device (100) for heating a traction battery (50) in a vehicle (300),
wherein the device (100) comprises an electrical consumer (10),
wherein the electrical consumer (10) takes up a load current and generates waste heat during operation,
and wherein the electrical consumer (10) is operated to heat the traction battery (50),
wherein
the device (100) comprises a drive connection (80) for connecting an electric drive (90),
**characterized in that**
the electrical consumer (10) comprises a braking resistor for taking up regenerative electrical power from the electric drive (90),
and **in that** the device (100) comprises a cooling circuit connection (32) for connecting the device to a cooling circuit (30) that is connected to the traction battery (50).

2. Device according to Claim 1,
wherein the device (100) comprises a battery connection (40) for establishing an electrical connection with a DC voltage connection (42) of the traction battery (50) to be heated.

3. Device according to either of the preceding claims,
wherein the device comprises a braking inverter (12), which is connected between the drive connection (80) and the consumer (10).

4. Electric drive train (200) for a vehicle,
wherein the drive train comprises a traction battery (50), a drive inverter (92) and a device (100) according to one of Claims 1 to 3.

5. Electric drive train (200) according to Claim 4,
wherein the drive inverter (92) is operated to heat the traction battery (50).

6. Vehicle (300) comprising a drive train (200) according to one of Claims 4 to 5.

7. Method (400) for heating a traction battery (50),
comprising a device (100) according to one of Claims 1 to 3,
comprising the step of:
operating (410) the electrical consumer (10) to heat the traction battery (50),
wherein the device (100) is connected to the electric drive (90) via a drive connection (80),
and the electrical consumer (10) takes up regenerative electrical power from the electric drive (90) by means of the braking resistor,
**characterized in that**
the operation (410) of the electrical consumer (10) comprises energizing the braking resistor and the waste heat of the braking resistor is supplied to the traction battery (50) via a cooling circuit (30).
i.

8. Method (400) according to Claim 7,
wherein the load current is drawn from the traction battery (50).

9. Method (400) for heating a traction battery (50),
comprising a drive train (200) according to one of Claims 4 to 5,
comprising the steps of:
operating (420) the drive inverter (92) to heat the traction battery (50),
wherein
the device (100) is connected to the electric drive (90) via a drive connection (80),
and the electrical consumer (10) takes up regenerative electrical power from the electric drive (90) by means of the braking resistor,
**characterized in that**
the operation (410) of the electrical consumer (10) comprises energizing the braking resistor and the waste heat of the braking resistor is supplied to the traction battery (50) via a cooling circuit (30).

10. Computer program, comprising instructions that cause the device according to Claims 1 to 3 to carry out the method steps according to Claims 7 to 9.

11. Computer-readable medium, comprising instructions that, when executed by a device according to Claims 1 to 3, carry out the method steps according to Claims 7 to 9.

## Revendications

1. Dispositif (100) de chauffage d'une batterie de traction (50) dans un véhicule (300),
le dispositif (100) comprenant un consommateur électrique (10),
le consommateur électrique (10) consommant un courant de charge et générant de la chaleur perdue lors du fonctionnement,
et le consommateur électrique (10) étant actionné pour chauffer la batterie de traction (50),
dans lequel
le dispositif (100) comprend une liaison d'entraînement (80) pour relier un entraînement électrique (90),
**caractérisé en ce que**
le consommateur électrique (10) comprend une résistance de freinage pour consommer de l'énergie électrique régénérative provenant de l'entraînement électrique (90),
et **en ce que** le dispositif (100) comprend une liaison de circuit de refroidissement (32) pour relier le dispositif à un circuit de refroidissement (30) connecté à la batterie de traction (50).

2. Dispositif selon la revendication 1,
le dispositif (100) comprenant une liaison de batterie (40) pour établir une connexion électrique à une liaison de tension continue (42) de la batterie de traction (50) à chauffer.

3. Dispositif selon l'une des revendications précédentes,
le dispositif comprenant un onduleur de freinage (12) qui est connecté entre la liaison d'entraînement (80) et le consommateur (10).

4. Chaîne cinématique électrique (200) pour un véhicule,
la chaîne cinématique électrique comprenant une batterie de traction (50), un onduleur d'entraînement (92) et un dispositif (100) selon l'une des revendications 1 à 3.

5. Chaîne cinématique électrique (200) selon la revendication 4,
dans laquelle l'onduleur d'entraînement (92) est actionné pour chauffer la batterie de traction (50).

6. Véhicule (300) doté d'une chaîne cinématique (200) selon l'une des revendications 4 à 5.

7. Procédé (400) de chauffage d'une batterie de traction (50),
comportant un dispositif (100) selon l'une des revendications 1 à 3,
comprenant l'étape consistant à :
actionner (410) le consommateur électrique (10) pour chauffer la batterie de traction (50),
dans lequel le dispositif (100) est connecté à l'entraînement électrique (90) par l'intermédiaire d'une liaison d'entraînement (80),
et le consommateur électrique (10) consomme de l'énergie électrique régénérative provenant de l'entraînement électrique (90) au moyen de la résistance de freinage,
**caractérisé en ce que**
l'actionnement (410) du consommateur électrique (10) comprend l'alimentation en courant de la résistance de freinage et **en ce que** la chaleur perdue de la résistance de freinage est acheminée vers la batterie de traction (50) par l'intermédiaire d'un circuit de refroidissement (30).
i.

8. Procédé (400) selon la revendication 7,
dans lequel le courant de charge est prélevé sur la batterie de traction (50).

9. Procédé (400) de chauffage d'une batterie de traction (50),
comportant une chaîne cinématique (200) selon l'une des revendications 4 à 5, comprenant les étapes consistant à :
actionner (420) l'onduleur d'entraînement (92) pour chauffer la batterie de traction (50),
dans lequel
le dispositif (100) est connecté à l'entraînement électrique (90) par l'intermédiaire d'une liaison d'entraînement (80),
et le consommateur électrique (10) consomme de l'énergie électrique régénérative provenant de l'entraînement électrique (90) au moyen de la résistance de freinage,
**caractérisé en ce que**
l'actionnement (410) du consommateur électrique (10) comprend l'alimentation en courant de la résistance de freinage et **en ce que** la chaleur perdue de la résistance de freinage est acheminée vers la batterie de traction (50) par l'intermédiaire d'un circuit de refroidissement (30).

10. Programme informatique comprenant des instructions qui provoquent l'exécution des étapes de procédé selon les revendications 7 à 9 par le dispositif selon l'une des revendications 1 à 3.

11. Support lisible par ordinateur comprenant des instructions qui exécutent les étapes de procédé selon les revendications 7 à 9 lors de leur exécution par un dispositif selon l'une des revendications 1 à 3.
